# EUROPÄISCHE PATENTSCHRIFT

(11) **EP 2 062 121 B1**
(45) Veröffentlichungstag und Bekanntmachung des Hinweises auf die Patenterteilung: **12.12.2012**
(21) Anmeldenummer: 07803373.5
(22) Anmeldetag: 10.09.2007
(51) Int. Cl.: G06F 3/048

(54) **TOUCHPAD ODER -SCREEN UND STELLELEMENT FÜR TOUCHPAD ODER -SCREEN**
TOUCHPAD OR TOUCHSCREEN AND CONTROL ELEMENT FOR A TOUCHPAD OR TOUCHSCREEN
TABLETTE OU ECRAN TACTILE ET ELEMENT DE COMMANDE POUR TABLETTE OU ECRAN TACTILE

(30) Priorität: 11.09.2006 DE 102006043208
(43) Veröffentlichungstag der Anmeldung: 27.05.2009
(73) Patentinhaber: SIEMENS AKTIENGESELLSCHAFT, 80333 München (DE)
(72) Erfinder: MEIER-ARENDT, Guido, 63225 Langen (DE); MÖLL, Winfried, 35321 Laubach (DE)
(86) Internationale Anmeldenummer: PCT/EP2007/059456
(87) Internationale Veröffentlichungsnummer: WO 2008/031787

(56) Entgegenhaltungen:
- EP-A- 0 618 528
- WO-A-99/63516

## Beschreibung

Die vorliegende Erfindung befasst sich mit einem Touchpad oder -screen mit einer sensitiven Bedienfläche zum Einstellen bestimmter Funktionen sowie einem Stellelement für einen Touchpad oder -screen.

Für die Auslösung und Einstellung bestimmter Funktionen, beispielsweise in Kraftfahrzeugen, existieren verschiedene Bedienkonzepte. Klassischerweise werden Stellelemente in der Form von Dreh- oder Schiebereglern eingesetzt, denen bestimmte Funktionen zugeordnet sind, beispielsweise die Temperatureinstellung einer Heizung oder die Lautstärkeeinstellung einer Audio-Anlage, oder die zur Ansteuerung bestimmter Menüfunktionen eingesetzt werden. Letzteres geschieht in Kombination mit einem Bildschirm, wobei die Koordination der Bewegung des Stellelements mit der Bildschirmwahrnehmung insbesondere dann schwierig sein kann, wenn gleichzeitig ein Kraftfahrzeug bewegt werden soll.

Die bereits seit längerer Zeit bekannten so genannten Touchscreens verfügen über sensitive Bedienflächen, so dass sie gleichzeitig zum Einstellen und Visualisieren bestimmter Funktionen geeignet sind. So genannte Touchpads besitzen sensitive Bedienflächen ohne Anzeigemöglichkeiten und werden in der Regel mit einem separaten Bildschirm eingesetzt. Ungünstig ist, dass die Tastenauslösung dem Benutzer keine taktile Rückmeldung gibt und sinnvollerweise nur Drucktastenbetätigungen simuliert werden. Es ist zwar auch bekannt, auf einem Touchscreen Schieberegler abzubilden, allerdings erfordert das Nachfahren einer auf dem Touchscreen vorgezeichneten Bahn vom Benutzer eine erhöhte Konzentration und ist daher insbesondere für Kraftfahrzeuge weniger geeignet.

Aus der DE 103 04 720 A1 ist ein Drehregler mit einem integrierten Touchpad bekannt. Letzter soll insbesondere der Eingabe alphanumerischer Zeichen dienen.und ist auf der mittleren Kreisfläche des Drehreglers vorgesehen, der im Übrigen konventionell aufgebaut ist. Nachteilig bei dieser Lösung ist der erhöhte Aufwand, da eine elektrische Kontaktierung des Drehreglers einerseits und des Touchpads andererseits erforderlich ist, wobei die Fläche auf dem Regler selbst auch nur beschränkte Bedienmöglichkeiten eröffnet.

Ferner ist aus der DE 103 04 191 A1 ein aus Ausgabe- und Eingabeeinheit kombiniertes System bekannt, wobei bei einer Ausführungsform ein konventioneller Drehregler mittig zwischen zwei Anzeigen angeordnet ist, die verschiedene Arbeitsumgebungen, beispielsweise Menüebenen darstellen können. Das gezeigte System arbeitet wiederum mit einem herkömmlichen Drehsteller, wobei neben dem wiederum erhöhten Aufwand der elektrischen Verdrahtung auch die Sonderformen der Bildschirme zu erwähnen sind, die die Kosten eines solches Systems weiter erhöhen können.

US2002/0118131 offenbart ein Gerät mit einem Touchpad und einem mechanischen Stellelement, wobei eine Einstellung des mechanischen Stellelementes Einfluss auf den Modus des Touchpads hat.

Aus WO99/63516 ist eine Vorrichtung bekannt, bei welcher ein mechanischer Schalter Einfluss auf das Verhalten eines Touchpad und einer zugehörigen Anzeigevorrichtung nimmt.

Die Aufgabe der vorliegenden Erfindung besteht darin, einen Touchpad oder -screen zu schaffen, der bei einfachem Aufbau eine hohe Bediensicherheit ermöglicht.

Erfindungsgemäß wird die Aufgabe durch einen Touchpad oder -screen der eingangs genannten Art gelöst, bei welchem wenigstens ein mechanisches Stellelement über der sensitiven Bedienfläche angeordnet ist und einen Auslöser aufweist, der bei einem Bewegen des Stellelements auf die sensitive Bedienfläche zur Funktionseinstellung einwirkt.

Der Vorteil der erfindungsgemäßen Lösung besteht darin, dass ein im Prinzip handelsüblicher Touchscreen oder -pad mit einem rein mechanisch arbeitenden Stellelement ergänzt wird, das seine Stellbewegungen über den Auslöser an die sensitive Bedienfläche weitergibt, wo dann softwareseitig die gewünschte Funktion eingestellt wird. Da das Stellelement rein mechanisch agiert, entfällt eine elektrische Verdrahtung und es muss lediglich der Touchpad oder -screen in üblicher Weise angeschlossen werden. Der Einsatz eines Touchscreens bietet den Vorteil, dass gleichzeitig die Funktionen visualisiert werden können und beispielsweise dem Stellelement eine Symbolleiste zur Erleichterung der Bedienung optisch zugeordnet werden kann.

Vorzugsweise ist das wenigstens eine Stellelement aus einem stationären Teil, der ortsfest zu der sensitiven Bedienfläche angeordnet ist, und einem beweglichen Teil gebildet, das an dem stationären Teil beweglich geführt ist. Bei einer solchen Ausführungsform kann die Bedienhaptik leicht durch eine Veränderung des Führungsmechanismus zwischen dem stationären und dem beweglichen Teil beeinflusst werden, beispielsweise durch Dämpfungs- oder Rastelemente.

In einer besonders einfachen Ausführungsform der Erfindung ist der stationäre Teil auf die sensitive Bedienfläche aufgeklebt. Mit der Klebetechnik lässt sich auf der glatten Bedienfläche ein sehr guter dauerhafter Halt erreichen, wobei grundsätzlich sogar ein handelsüblicher Touchpad oder -screen eingesetzt werden kann.

Alternativ zu einem mit dem Touchpad oder -screen verklebten Stellelement ist auch eine Ausführungsform möglich, bei welcher der stationäre Teil an einem Rahmen seitlich der sensitiven Bedienfläche festgelegt oder der Rahmen selbst den stationären Teil des Stellelements bildet. Diese Variante erfordert geeignete Aufnahmen am Rahmen des Touchpads oder -screens, um den stationären Teil beispielsweise zu verrasten, bzw. in dem Rahmen selbst ist eine Führung für das Stellelement ausgebildet. Selbstverständlich muss der Auslöser in jedem Fall mit der sensitiven Bedienfläche zusammenwirken.

Bei nicht verklebten Ausführungsformen ist es auch ohne weiteres möglich, das wenigstens eine Stellelement abnehmbar oder von der Oberfläche weg beweglich auszubilden, beispielsweise abklappbar oder wegschwenkbar, wenn beispielsweise ein Tochscreen auch zu reinen Darstellungszwecken genutzt werden soll, um beispielsweise bei einer Kartendarstellung eine möglichst große Anzeigefläche zur Verfügung zu haben.

Grundsätzlich kann das Stellelement in der Art bekannter Stellelemente ausgebildet sein, d. h. beispielsweise als Dreh- oder Schieberegler, wobei auch der gleichzeitige Einsatz von Dreh- und Schiebereglern möglich ist.

Der Auslöser kann beispielsweise als Schleifkontakt federnd an der sensitiven Bedienfläche anliegen und der Bewegung des Stellelements folgen. Die Bedienfläche würde dann die Bewegung des Schleifkontaktes erfassen und softwareseitig zum Einstellen bestimmter Funktionen umsetzen. Alternativ kann der Auslöser aber auch einen Feder- oder Hammermechanismus aufweisen, der bei einer Bewegung des Stellelements diskrete Schaltbewegung ausführt. Dabei kann der Auslöser entweder dem stationären Teil zugeordnet sein und entsprechend intermittierend auf die gleiche Stelle der sensitiven Bedienfläche einwirken oder sich mit dem beweglichen Teil bewegen und entsprechend auf der geführten Bahn eine Abfolge von Schaltbewegungen ausführen.

Beispielsweise kann der Feder- oder Hammermechanismus eine Schrägfläche oder eine Abfolge von Schrägflächen aufweisen, die bei einer Bewegung des Stellelements ein Federelement gegen die Bedienfläche bewegen. Die Schrägflächen können beispielsweise als Sägezahnkontur am beweglichen Teil des Stellelements angeordnet sein, während das Federelement am stationären Teil angeordnet ist, um eine Schaltbewegung an einer Stelle der Bedienfläche auszulösen, während bei einem bewegten Auslöser die Anordnung umgekehrt vorzunehmen ist.

Bei einem Touchscreen ist es bevorzugt, diesen in ein Anzeigefeld zur Darstellung funktionsbezogener Informationen und ein Bedienfeld zu gliedern, in welchem das wenigstens eine Stellelement angeordnet ist und gegebenenfalls Symbole dargestellt werden. Wie bereits erwähnt, kann bei einem entfernbaren Stellelement auch das Bedienfeld gegebenenfalls als Anzeigefeld genutzt werden.

Wie ebenfalls bereits erwähnt, werden dem Stellelement beim Einsatz eines Tochscreens vorzugsweise Symbole zugeordnet, die der jeweiligen Funktion angepasst sind, beispielsweise eine Temperaturanzeige oder eine Dezibelanzeige für die Lautstärkeregelung. Vorzugsweise ist dem Stellelement eine gesonderte Anzeigefläche zugeordnet, um die funktionsbezogenen Informationen darzustellen. Vorzugsweise sind Lichtleitelemente vorgesehen, die eine Darstellung auf dem Touchscreen auf die Anzeigefläche abbilden. Die Lichtleitelemente können mit Hilfe von Farbfiltern und/oder Linsenelementen die Darstellung des Touchscreens auf der Anzeigefläche farblich variieren und/oder vergrößern oder verkleinern, um diese von der sonstigen Darstellung deutlich abzuheben.

Wie bereits erwähnt, kann die Bedienhaptik des Stellelements durch Ausgestaltung der Führung zwischen dem beweglichen und dem stationären Teil beeinflusst werden. Eine weitergehende Beeinflussung der Schiebe- und Drehkräfte ist mit Hilfe eines unterhalb der sensitiven Oberfläche angeordneten Elektromagneten möglich, der zum Ändern der Bediencharakteristik mit magnetisch wirksamen Elementen am beweglichen Teil des Stellelements zusammenwirkt.

Gegenstand der vorliegenden Erfindung ist auch ein Stellelement für einen Touchscreen, um bei einem an sich handelsüblichen Touchscreen die Vorzüge der zuvor beschriebenen Kombination aus Touchscreen und Stellelement zu erreichen. Hierzu ist ein Stellelement vorgesehen, das einen stationären Teil, der an dem Touchscreen festlegbar ist, einen beweglichen Teil, mit welchem Stellbewegungen für eine Funktion einstellbar sind, und einen Auslöser aufweist, der dem stationären oder beweglichen Teil zugeordnet ist, wobei der Auslöser nach der Montage diskret oder kontinuierlich auf die sensitive Bedienfläche einwirkt. Ein solches Stellelement kann als Drehregler oder Schieberegler ausgebildet und bei einer besonders einfachen Ausführungsform kann der stationäre Teil mit einer glattflächigen Oberfläche zum Auftragen von Kleber versehen sein, um das Stellelement auf einfache Weise auf der Bedienfläche festlegen zu können.

Nachfolgend wird anhand der beigefügten Abbildungen näher auf ein Ausführungsbeispiel der Erfindung eingegangen. Es zeigen:
- Fig. 1: eine schematische Prinzipskizze eines Touchscreens mit einem Drehsteller;
- Fig. 2: eine schematische Ansicht des beweglichen Bedienteils des Drehstellers aus Fig. 1 von unten und
- Fig. 3: eine schematische Draufsicht auf ein feststehendes Teil des Drehstellers aus Fig. 1.

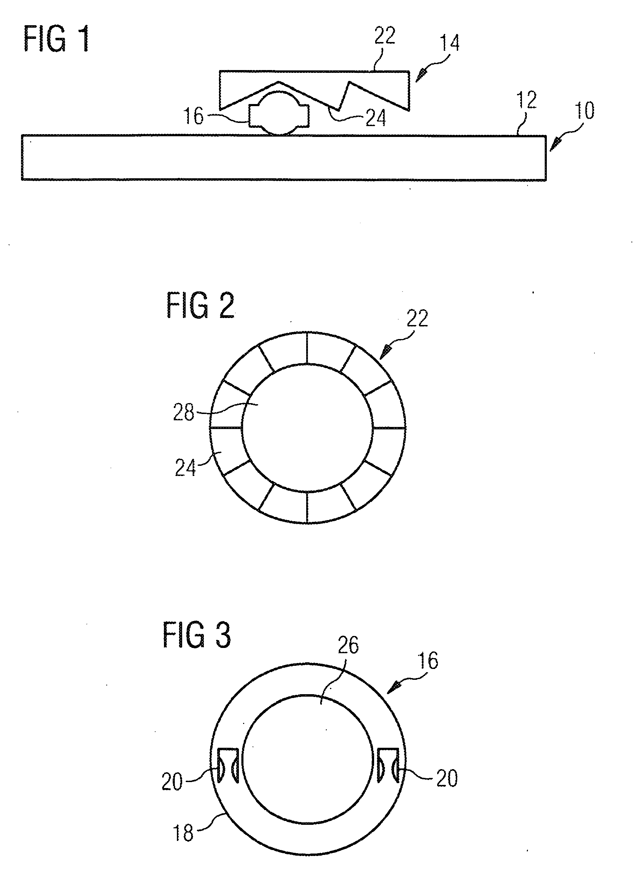

In Fig. 1 ist schematisch ein Touchscreen 10 mit einem auf dessen sensitiver Oberfläche 12 festgelegten Drehsteller 14 gezeigt. Der Drehsteller 14 besitzt einen feststehenden unteren Teil 16, der als flacher Ringkörper 18 (siehe Fig. 3) mit beispielsweise zwei Federzungen 20 ausgebildet ist. Der flache Ringkörper 18 ist unmittelbar auf die Oberfläche 12 des Touchscreens aufgeklebt.

An dem feststehenden Teil 16 ist ein Bedienteil 22 drehbar gelagert, das an seiner Unterseite mit einer ringförmigen Sägezahnstruktur 24 ausgebildet ist. Beim Verdrehen des drehbaren Bedienteils 22 wirkt die Sägezahnstruktur mit den Federzungen 20 derart zusammen, dass sie diese gegen die sensitive Fläche 12 des Touchscreens drückt, wobei zu hohe Kräfte durch die Elastizität der Federzungen 20 vermieden werden. Im Bereich der Andruckstelle der Federzunge 20 ist der Touchscreen 10 derart programmiert, dass durch das Andrücken eine bestimmte Funktion ausgelöst wird. Beim fortgesetzten Drehen des Bedienteils 22 kommt es daher zu einer durch die Federzungen 20 ausgelösten Folge diskreter Schaltvorgänge.

Eine dem Drehsteller 14 zugeordnete Skalierung kann um diesen herum auf der Oberfläche des Touchscreens 10 angezeigt werden. Bei der gezeigten Ausführungsform verfügt der feststehende Teil 16 über einen transparenten Bereich 26, der eine Darstellung des Touchscreens 10 auf einer Anzeigefläche 28 im mittleren Bereich des Drehstellers 14 sichtbar abbildet. Durch Linsen, Faserleiter und/oder Farbfilter lässt sich eine solche Darstellung optisch noch hervorheben, so dass die Anzeige in diesem Bereich sich deutlich von beispielsweise anderen Anzeigen auf der Bildschirmoberfläche 12 abhebt.

Die geführte Bewegung des Bedienteils 22 bildet eine taktile Unterstützung und vereinfacht dadurch den Koordinationsprozess zwischen Auge und Hand, so dass beispielsweise bei einer Bedienung in einem Kraftfahrzeug der Nutzer seinen Blick wieder auf das Verkehrsgeschehen wenden kann, sobald er mit der Hand den Drehsteller erfasst hat.

Das gezeigte Ausführungsbeispiel stellt einen besonders einfachen Drehsteller 14 dar, der dem Nutzer neben der geführten Drehbewegung auch eine definierte Rastwirkung vermittelt, wodurch der Benutzer eine Rückmeldung über das Verändern der Einstellung der jeweiligen Funktion erhält. Es sind aber auch andere Ausgestaltungen möglich, bei denen beispielsweise auf eine Rastwirkung verzichtet wird, indem beispielsweise an dem beweglichen Bedienteil 22 eine auf der Oberfläche des Touchscreens federnd anliegende Federzunge vorgesehen ist. Selbstverständlich kann auch eine diskret auslösende Federzunge an dem beweglichen Bedienteil 22 vorgesehen sein, wobei dann die Sägezahnstruktur entsprechend an dem feststehenden Teil ausgebildet ist.

Es sind auch andere Auslösemechanismen einsetzbar, beispielsweise Federelemente, die ähnlich einem Klöppel vorgespannt werden und dann zum Auslösen eines Schaltvorgangs kurz gegen die Oberfläche des Touchscreens schlagen. Eine dynamische Beeinflussung der Stellkräfte kann beispielsweise durch einen Elektromagneten unterhalb des Bildschirms realisiert werden, der mit einem dem drehbaren Element zugeordneten Magnetelement zusammenwirkt.

Selbstverständlich lässt sich ein Touchscreen in ähnlicher Weise durch einen Schiebesteller in seiner Bedienbarkeit verbessern, der konstruktiv ähnlich wie der zuvor beschriebene Drehsteller aufgebaut ist.

Die Anbringung an dem Touchscreen kann alternativ auch dadurch erfolgen, dass ein Stellelement beispielsweise in der Form des zuvor beschriebenen Drehstellers seitlich der sensitiven Bedienfläche 12 an einem Rahmen festgelegt wird, beispielsweise durch Verrasten. Hierbei ist es auch möglich, die Führung des beweglichen Bedienteils selbst am Rahmen festzulegen, wobei dann allerdings in diesem Bereich entsprechende konstruktive Maßnahmen vorzusehen sind.

## Patentansprüche

1. Touchpad oder -screen mit einer sensitiven Bedienfläche (12) zum Einstellen bestimmter Funktionen und mit einem mechanischen Stellelement (14), wobei das mechanische Stellelement (14) einen stationären Teil (16) aufweist, der ortsfest bezüglich der sensitiven Bedien fläche (12) angeordnet ist, und einen beweglichen Teil (22) aufweist, der an dem stationären Teil (16) beweglich geführt ist, **dadurch gekennzeichnet, dass** das mechanische Stellelement über der sensitiven Bedienfläche (12) angeordnet ist und einen Auslöser (20) aufweist, der bei einem Bewegen des Stellelements (14) auf die sensitive Bedienfläche (12) zum Einstellen einer Funktionen einwirkt und wobei der Auslöser (20) dem stationären Teil (16) zugeordnet ist.

2. Touchpad oder -screen nach Anspruch 1, **dadurch gekennzeichnet, dass** der stationäre Teil (16) auf die sensitive Bedienfläche (12) aufgeklebt ist.

3. Touchpad oder -screen nach Anspruch 1, **dadurch gekennzeichnet, dass** der stationäre Teil (16) an einem Rahmen seitlich der Bildschirmfläche (12) festgelegt ist oder der Rahmen selbst den stationären Teil des Stellelements bildet.

4. Touchpad oder -screen nach Anspruch 3, **dadurch gekennzeichnet, dass** das Stellelement abnehmbar oder von der Bedienfläche (12) weg beweglich ist.

5. Touchpad oder -screen nach einem der vorhergehenden Ansprüche, **dadurch gekennzeichnet, dass** das Stellelement (14) als Drehsteller ausgebildet ist.

6. Touchpad oder -screen nach einem der Ansprüche 1 bis 4, **dadurch gekennzeichnet, dass** das Stellelement als Schieberegler ausgebildet ist.

7. Touchpad oder -screen nach einem der vorhergehenden Ansprüche, **dadurch gekennzeichnet, dass** der Auslöser als Schleifkontakt federnd an der sensitiven Bedienfläche anliegt und der Bewegung des Stellelements folgt.

8. Touchpad oder -screen nach einem der Ansprüche 1 bis 6, **dadurch gekennzeichnet, dass** der Auslöser (20) einen Feder- oder Hammermechanismus aufweist, der bei einem Bewegen des Stellelements (14) diskrete Schaltbewegungen ausführt.

9. Touchpad oder -screen nach Anspruch 8, **dadurch gekennzeichnet, dass** der Feder- oder Hammermechanismus eine Schrägfläche oder eine Abfolge (24) von Schrägflächen aufweist, die bei einer Bewegung des Stellelements (14) ein Federelement (20) gegen die sensitive Bedienfläche (12) bewegen.

10. Touchpad oder -screen nach Anspruch 9, **dadurch gekennzeichnet, dass** die Schrägflächen als Sägezahnkontur (24) am beweglichen Teil (22) des Stellelements (14) angeordnet sind und das Federelement (20) am stationären Teil (16) angeordnet ist.

11. Touchscreen nach einem der vorhergehenden Ansprüche, **dadurch gekennzeichnet, dass** dieser in ein Anzeigefeld zur Darstellung funktionsbezogener Informationen und ein Bedienfeld gegliedert ist, in welchem das Stellelement (14) angeordnet ist.

12. Touchscreen nach einem der vorhergehenden Ansprüche, **dadurch gekennzeichnet, dass** an dem Stellelement (14) eine gesonderte Anzeigefläche vorgesehen ist, die funktionsbezogene Informationen darstellt.

13. Touchscreen nach Anspruch 12, **dadurch gekennzeichnet , dass** ein Lichtleitelement eine Darstellung des Touchscreens auf die Anzeigefläche abbildet.

14. Touchscreen nach Anspruch 13, **dadurch gekennzeichnet , dass** das Lichtleitelement Linsenelemente, Faserleiter und/oder Farbfilter aufweist, die die Darstellung des Touchscreens auf der Anzeigefläche farblich verändern und/oder vergrößern oder verkleinern.

15. Touchpad oder -screen nach einem der vorhergehenden Ansprüche, **dadurch gekennzeichnet , dass** unterhalb der sensitiven Bedienfläche (12) ein Elektromagnet vorgesehen ist, der zur Änderung der Bediencharakteristik mit einem dem Stellelement zugeordneten Magnetelement zusammenwirkt.

16. Stellelement für einen Touchscreen, welches über einer sensitiven Bedienfläche des Touchscreens angeordnet ist, mit
einem stationären Teil (16), der ortsfest bezüglich des sensitiven Bedienfläche angeordnet ist und
einem beweglichen Teil (14), mit welchem Stellbewegungen für eine Funktion ausführbar sind, **dadurch gekennzeichnet, dass** das Stellelement einen dem stationären Teil (16) zugeordneten Auslöser (20) zum diskreten oder kontinuierlichen Einwirken auf eine sensitive Bedienfläche (12) des Touchscreens (10) aufweist.

17. Stellelement nach Anspruch 16, **dadurch gekennzeichnet, dass** es als Drehsteller (14) oder Schieberegler ausgebildet ist.

18. Stellelement nach Anspruch 16 oder 17, **dadurch gekennzeichnet, dass** das stationäre Teil (16) eine glattflächige Oberfläche zum Aufbringen von Kleber aufweist.

## Claims

1. Touchpad or touchscreen having a sensitive control panel (12) for setting specific functions and having a mechanical control element (14), wherein the mechanical control element (14) has a stationary part (16) which is arranged immovably in relation to the sensitive control panel (12) and a movable part (22) which is guided in a movable manner on the stationary part (16), **characterised in that** the mechanical control element (14) is arranged above the sensitive control panel (12) and has an actuator (20) which acts on the sensitive control panel (12) in order to set a function when the control element (14) is moved, and wherein the actuator (20) is assigned to the stationary part (16).

2. Touchpad or touchscreen according to claim 1, **characterised in that** the stationary part (16) is glued to the sensitive control panel (12).

3. Touchpad or touchscreen according to claim 1, **characterised in that** the stationary part (16) is fixed to a frame at the side of the display screen surface (12) or the frame itself forms the stationary part of the control element.

4. Touchpad or touchscreen according to claim 3, **characterised in that** the control element can be detached or moved away from the control panel (12).

5. Touchpad or touchscreen according to one of the preceding claims, **characterised in that** the control element (14) is embodied as a rotary control.

6. Touchpad or touchscreen according to one of claims 1 to 4, **characterised in that** the control element is embodied as a slider control.

7. Touchpad or touchscreen according to one of the preceding claims, **characterised in that** the actuator bears on the sensitive control panel as a spring-loaded sliding contact and follows the movement of the control element.

8. Touchpad or touchscreen according to one of claims 1 to 6, **characterised in that** the actuator (20) has a spring or hammer mechanism which executes discrete switching movements when the control element (14) is moved.

9. Touchpad or touchscreen according to claim 8, **characterised in that** the spring or hammer mechanism has an inclined surface or a sequence (24) of inclined surfaces which, when the control element (14) is moved, move a spring element (20) against the sensitive control panel (12).

10. Touchpad or touchscreen according to claim 9, **characterised in that** the inclined surfaces are arranged as a sawtooth contour (24) on the movable part (22) of the control element (14) and the spring element (20) is arranged on the stationary part (16).

11. Touchscreen according to one of the preceding claims, **characterised in that** said touchscreen is subdivided into a display panel for displaying function-related information and a control panel in which the control element (14) is arranged.

12. Touchscreen according to one of the preceding claims, **characterised in that** a separate display panel which displays function-related information is provided on the control element (14).

13. Touchscreen according to claim 12, **characterised in that** an optical fibre element images a representation of the touchscreen onto the display panel.

14. Touchscreen according to claim 13, **characterised in that** the optical fibre element has lens elements, optical fibre conductors and/or colour filters which vary the colour of and/or increase or reduce the size of the representation of the touchscreen on the display panel.

15. Touchpad or touchscreen according to one of the preceding claims, **characterised in that** an electromagnet is provided beneath the sensitive display panel (12), said electromagnet acting in conjunction with a magnetic element assigned to the control element in order to vary the operating characteristics.

16. Control element for a touchscreen which is arranged above a sensitive control panel of the touchscreen, having a stationary part (16) which is arranged immovably in relation to the sensitive control panel, and having a movable part (14) by means of which control movements for a function can be executed,
**characterised in that** the control element has an actuator (20) assigned to the stationary part (16) for acting discretely or continuously on a sensitive control panel (12) of the touchscreen (10).

17. Control element according to claim 16, **characterised in that** it is embodied as a rotary control (14) or a slider control.

18. Control element according to claim 16 or 17, **characterised in that** the stationary part (16) has a smooth surface for the application of adhesive.

## Revendications

1. Tablette ou écran tactile doté (e) d'une surface de commande sensitive (12) servant à régler certaines fonctions et d'un élément de commande mécanique (14), l'élément de commande mécanique (14) comprenant une partie stationnaire (16) agencée de manière fixe par rapport à la surface de commande sensitive (12) et une partie mobile (22) guidée de manière mobile sur la partie stationnaire (16), caractérisé(e) en ce que l'élément de commande mécanique (14) est agencé au-dessus de la surface de commande sensitive (12) et comporte un déclencheur (20), lequel agit sur la surface de commande sensitive (12) servant à régler une fonction lorsque l'on déplace l'élément de commande (14), ledit déclencheur (20) étant associé à la partie stationnaire (16).

2. Tablette ou écran tactile selon la revendication 1, caractérisé(e) en ce que la partie stationnaire (16) est collée sur la surface de commande sensitive (12).

3. Tablette ou écran tactile selon la revendication 1, caractérisé(e) en ce que la partie stationnaire (16) est fixée sur un cadre sur le côté de la surface d'écran (12), ou le cadre forme lui-même la partie stationnaire de l'élément de commande.

4. Tablette ou écran tactile selon la revendication 3, caractérisé(e) en ce que l'élément de commande est amovible ou peut être éloigné de la surface de commande (12).

5. Tablette ou écran tactile selon l'une des revendications précédentes, caractérisé(e) en ce que l'élément de commande (14) est réalisé sous forme d'actuateur rotatif.

6. Tablette ou écran tactile selon l'une des revendications 1 à 4, caractérisé(e) en ce que l'élément de commande est réalisé sous forme de curseur de réglage.

7. Tablette ou écran tactile selon l'une des revendications précédentes, caractérisé(e) en ce que le déclencheur en tant que contact frotteur est en appui élastique sur la surface de commande sensitive et suit le mouvement de l'élément de commande.

8. Tablette ou écran tactile selon l'une des revendications 1 à 6, caractérisé(e) en ce que le déclencheur (20) comporte un mécanisme à ressort ou marteau, lequel réalise des opérations de commutation lorsque l'on déplace l'élément de commande (14).

9. Tablette ou écran tactile selon la revendication 8, caractérisé(e) en ce que le mécanisme à ressort ou marteau présente une surface oblique ou une suite (24) de surfaces obliques, lesquelles entraînent un élément à ressort (20) contre la surface de commande sensitive (12) lorsque l'on déplace l'élément de commande (14).

10. Tablette ou écran tactile selon la revendication 9, caractérisé(e) en ce que les surfaces obliques réalisées sous forme de contour en dents de scie (24) sont agencées sur la partie mobile (22) de l'élément de commande (14) et l'élément à ressort (20) est agencé sur la partie stationnaire (16).

11. Écran tactile selon l'une des revendications précédentes, **caractérisé en ce que** celui-ci est divisé en une zone d'affichage servant à représenter des informations fonctionnelles et une zone de commande dans laquelle est placé l'élément de commande (14).

12. Écran tactile selon l'une des revendications précédentes, **caractérisé en ce qu'**il est prévu une surface d'affichage séparée sur l'élément de commande (14), qui représente des informations fonctionnelles.

13. Écran tactile selon la revendication 12, **caractérisé en ce qu'**un élément guide de lumière reproduit une représentation de l'écran tactile sur la surface d'affichage.

14. Écran tactile selon la revendication 13, **caractérisé en ce que** l'élément guide de lumière comporte des éléments lentilles, des fibres optiques et/ou des filtres chromatiques, lesquels modifient la représentation de l'écran tactile sur la surface d'affichage en termes de couleurs et/ou l'agrandissent ou la réduisent.

15. Tablette ou écran tactile selon l'une des revendications précédentes, caractérisé(e) en ce qu'un électroaimant est prévu au-dessous de la surface de commande sensitive (12), qui coopère avec un élément magnétique associée à l'élément de commande pour modifier la caractéristique de commande.

16. Élément de commande pour un écran tactile, agencé au-dessus d'une surface de commande sensitive de l'écran tactile, comprenant une partie stationnaire (16) agencée de manière fixe par rapport à la surface de commande sensitive et une partie mobile (14) permettant d'effectuer des opérations de réglage d'une fonction, **caractérisé en ce que** l'élément de commande comporte un déclencheur (20) associé à la partie stationnaire (16), servant à agir de manière discrète ou continue sur une surface de commande sensitive (12) de l'écran tactile (10).

17. Élément de commande selon la revendication 16, **caractérisé en ce qu'**il est réalisé sous forme d'actuateur rotatif (14) ou de curseur de réglage.

18. Élément de commande selon la revendication 16 ou 17, **caractérisé en ce que** la partie stationnaire (16) présente une surface lisse permettant l'application de colle.
